# EUROPEAN PATENT SPECIFICATION

(11) **EP 4 605 805 B1**
(45) Date of publication and mention of the grant of the patent: **08.07.2026**
(21) Application number: 23804824.3
(22) Date of filing: 11.10.2023
(51) Int. Cl.: G05D 1/224, G05D 1/82, B60W 50/14, B60W 30/09

(54) **GUIDED GENERATION OF TRAJECTORIES FOR REMOTE VEHICLE ASSISTANCE**
GEFÜHRTE ERZEUGUNG VON TRAJEKTORIEN FÜR ENTFERNTE FAHRZEUGUNTERSTÜTZUNG
GÉNÉRATION GUIDÉE DE TRAJECTOIRES POUR ASSISTANCE DE VÉHICULE À DISTANCE

(30) Priority: 17.10.2022 US 202263416868 P; 29.11.2022 US 202218071360
(43) Date of publication of application: 27.08.2025
(73) Proprietor: Motional AD LLC, Boston, MA 02210 (US)
(72) Inventor: SRIDHARAN, Rohit, Boston, MA 02210 (US)
(74) Representative: Fish & Richardson P.C.
(86) International application number: PCT/US2023/034928
(87) International publication number: WO 2024/086049

(56) References cited:
- US-A1- 2019 235 516
- US-A1- 2022 147 041
- US-A1- 2022 165 100

## Description

### BACKGROUND

An autonomous vehicle is capable of sensing and navigating through its surrounding environment with minimal to no human input. To safely navigate the vehicle along a selected path, the vehicle may rely on a motion planning process to generate, update, and execute one or more trajectories through its immediate surroundings. The trajectory of the vehicle may be generated based on the current condition of the vehicle itself and the conditions present in the vehicle's surrounding environment, which may include mobile objects such as other vehicles and pedestrians as well as immobile objects such as buildings and street poles. For example, the trajectory may be generated to avoid collisions between the vehicle and the objects present in its surrounding environment. Moreover, the trajectory may be generated such that the vehicle operates in accordance with other desirable characteristics such as path length, ride quality or comfort, required travel time, observance of traffic rules, adherence to driving practices, and/or the like.

US 2022/147041 A1 describes that a command is received expressing an objective for operation of a vehicle within a denominated travel segment of a planned travel route. The objective spans a time series of (for example, is expressed at a higher or more abstract level than) control inputs that are to be delivered to one or more of the brake, accelerator, steering, or other operational actuator of the vehicle. The command is expressed to cause operation of the vehicle along a selected man-made travel structure of the denominated travel segment. A feasible manner of operation of the vehicle is determined to effect the command. A succession of control inputs is generated to one or more of the brake, accelerator, steering or other operational actuator of the vehicle in accordance with the determined feasible manner of operation.

### BRIEF DESCRIPTION OF THE FIGURES

FIG. 1 is an example environment in which a vehicle including one or more components of an autonomous system can be implemented;
FIG. 2 is a diagram of one or more systems of a vehicle including an autonomous system;
FIG. 3 is a diagram of components of one or more devices and/or one or more systems of FIGS. 1 and 2;
FIG. 4A is a diagram of certain components of an autonomous system;
FIG. 4B is a diagram of an implementation of a remote vehicle assistance (RVA) system;
FIG. 5 is a sequence diagram of an example of a process for generating a trajectory at a remote vehicle assistance system for ingestion by a planning system of an autonomous vehicle;
FIG. 6A depicts a screenshot of an example of a user interface for generating a trajectory;
FIG. 6B depicts a screenshot of another example of a user interface for generating a trajectory;
FIG. 6C depicts a screenshot of another example of a user interface for generating a trajectory;
FIG. 6D depicts a screenshot of another example of a user interface for generating a trajectory; and
FIG. 7 is a flowchart of a process for generating a trajectory at a remote vehicle assistance system for ingestion by a planning system of an autonomous vehicle.

### DETAILED DESCRIPTION

In the following description numerous specific details are set forth in order to provide a thorough understanding of the present disclosure for the purposes of explanation. It will be apparent, however, that the embodiments described by the present disclosure can be practiced without these specific details. In some instances, well-known structures and devices are illustrated in block diagram form in order to avoid unnecessarily obscuring aspects of the present disclosure.

Specific arrangements or orderings of schematic elements, such as those representing systems, devices, modules, instruction blocks, data elements, and/or the like are illustrated in the drawings for ease of description. However, it will be understood by those skilled in the art that the specific ordering or arrangement of the schematic elements in the drawings is not meant to imply that a particular order or sequence of processing, or separation of processes, is required unless explicitly described as such. Further, the inclusion of a schematic element in a drawing is not meant to imply that such element is required in all embodiments or that the features represented by such element may not be included in or combined with other elements in some embodiments unless explicitly described as such.

Further, where connecting elements such as solid or dashed lines or arrows are used in the drawings to illustrate a connection, relationship, or association between or among two or more other schematic elements, the absence of any such connecting elements is not meant to imply that no connection, relationship, or association can exist. In other words, some connections, relationships, or associations between elements are not illustrated in the drawings so as not to obscure the disclosure. In addition, for ease of illustration, a single connecting element can be used to represent multiple connections, relationships or associations between elements. For example, where a connecting element represents communication of signals, data, or instructions (e.g., "software instructions"), it should be understood by those skilled in the art that such element can represent one or multiple signal paths (e.g., a bus), as may be needed, to affect the communication.

Although the terms first, second, third, and/or the like are used to describe various elements, these elements should not be limited by these terms. The terms first, second, third, and/or the like are used only to distinguish one element from another. For example, a first contact could be termed a second contact and, similarly, a second contact could be termed a first contact without departing from the scope of the described embodiments. The first contact and the second contact are both contacts, but they are not the same contact.

The terminology used in the description of the various described embodiments herein is included for the purpose of describing particular embodiments only and is not intended to be limiting. As used in the description of the various described embodiments and the appended claims, the singular forms "a," "an" and "the" are intended to include the plural forms as well and can be used interchangeably with "one or more" or "at least one," unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this description specify the presence of stated features, integers, steps, operations, elements, and/or components, but do not preclude the presence or addition of one or more other features, integers, steps, operations, elements, components, and/or groups thereof.

As used herein, the terms "communication" and "communicate" refer to at least one of the reception, receipt, transmission, transfer, provision, and/or the like of information (or information represented by, for example, data, signals, messages, instructions, commands, and/or the like). For one unit (e.g., a device, a system, a component of a device or system, combinations thereof, and/or the like) to be in communication with another unit means that the one unit is able to directly or indirectly receive information from and/or send (e.g., transmit) information to the other unit. This may refer to a direct or indirect connection that is wired and/or wireless in nature. Additionally, two units may be in communication with each other even though the information transmitted may be modified, processed, relayed, and/or routed between the first and second unit. For example, a first unit may be in communication with a second unit even though the first unit passively receives information and does not actively transmit information to the second unit. As another example, a first unit may be in communication with a second unit if at least one intermediary unit (e.g., a third unit located between the first unit and the second unit) processes information received from the first unit and transmits the processed information to the second unit. In some embodiments, a message may refer to a network packet (e.g., a data packet and/or the like) that includes data.

As used herein, the term "if" is, optionally, construed to mean "when", "upon", "in response to determining," "in response to detecting," and/or the like, depending on the context. Similarly, the phrase "if it is determined" or "if [a stated condition or event] is detected" is, optionally, construed to mean "upon determining," "in response to determining," "upon detecting [the stated condition or event]," "in response to detecting [the stated condition or event]," and/or the like, depending on the context. Also, as used herein, the terms "has", "have", "having", or the like are intended to be open-ended terms. Further, the phrase "based on" is intended to mean "based at least partially on" unless explicitly stated otherwise.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments can be practiced without these specific details. In other instances, well-known methods, procedures, components, circuits, and networks have not been described in detail so as not to unnecessarily obscure aspects of the embodiments.

### General Overview

The invention is defined by the appended claims. In some aspects and/or embodiments, systems, methods, and computer program products described herein include and/or implement the generating of a trajectory at a remote vehicle assistance (RVA) system for ingestion by a planning system of a vehicle (e.g., an autonomous vehicle). For example, the remote vehicle assistance system may receive, from a remote assistance operator, one or more user inputs specifying a proposed trajectory for the vehicle. Instead of sending the proposed trajectory directly to the planning system of the vehicle, the remote vehicle assistance system may first validate the proposed trajectory to ensure that the proposed trajectory satisfies one or more constraints imposed by the planning system of the vehicle. The remote vehicle assistance system may determine, based at least on a current condition of the vehicle and/or the conditions present in the vehicle's surrounding environment, the one or more constraints imposed by the planning system of the vehicle. For instance, in some cases, the one or more constraints imposed by the planning system of the vehicle may be determined based on a map and/or one or more objects tracked by the vehicle. Moreover, in some cases, the one or more constraints may include the proposed trajectory being within a drivable surface, not colliding with one or more objects present in a surrounding environment of the vehicle, being within a lane boundary, and/or the like. Where the proposed trajectory is determined to satisfy the one or more constraints imposed by the planning system of the vehicle, the remote vehicle assistance system may send the proposed trajectory to the planning system of the vehicle. Contrastingly, the remote vehicle assistance system may prevent the proposed trajectory from being sent to the planning system of the vehicle if the proposed trajectory fails to satisfy the one or more constraints imposed by the planning system of the vehicle.

By virtue of the implementation of systems, methods, and computer program products described herein, techniques for generating, at a remote vehicle assistance (RVA) system, a trajectory for a vehicle (e.g., an autonomous vehicle) that satisfies one or more constraints imposed by a planning system of the vehicle. Conventional solutions will send a proposed trajectory generated at the remote vehicle assistance system directly to the planning system of the vehicle without any validation that the proposed trajectory satisfies one or more constraints imposed by the planning system of the vehicle. As such, with conventional solutions, the proposed trajectory may be sent to the planning system of the vehicle even when the proposed trajectory includes mistakes such as overlapping a curb, exiting a drivable surface, colliding with an object, and/or the like. In cases where the proposed trajectory violates the constraints imposed by the planning system of the vehicle, the proposed trajectory may be rejected by the planning system of the vehicle. The total time cost associated with the proposed path being rejected by the vehicle's planning system and subsequently redrawn at the remote assistance system is high (e.g., typically between one to three minutes). Validating the proposed trajectory to ensure that the proposed trajectory satisfies the constraints imposed by the planning system of the vehicle before sending the proposed trajectory to the planning system may minimize the likelihood of proposed trajectory being rejected by the planning system, thus avoiding unnecessary delays and improving the experience of the vehicle's driver and passenger as well as the experience of the remote assistance operator.

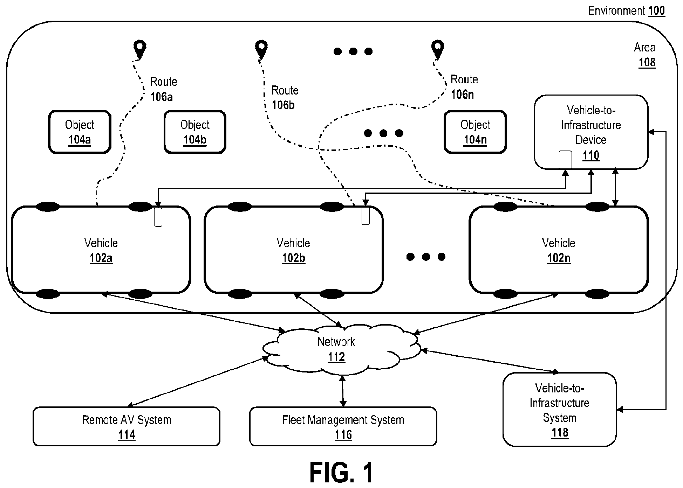

Referring now to FIG. 1, illustrated is example environment 100 in which vehicles that include autonomous systems, as well as vehicles that do not, are operated. As illustrated, environment 100 includes vehicles 102a-102n, objects 104a-104n, routes 106a-106n, area 108, vehicle-to-infrastructure (V2I) device 110, network 112, remote autonomous vehicle (AV) system 114, fleet management system 116, and V2I system 118. Vehicles 102a-102n, vehicle-to-infrastructure (V2I) device 110, network 112, autonomous vehicle (AV) system 114, fleet management system 116, and V2I system 118 interconnect (e.g., establish a connection to communicate and/or the like) via wired connections, wireless connections, or a combination of wired or wireless connections. In some embodiments, objects 104a-104n interconnect with at least one of vehicles 102a-102n, vehicle-to-infrastructure (V2I) device 110, network 112, autonomous vehicle (AV) system 114, fleet management system 116, and V2I system 118 via wired connections, wireless connections, or a combination of wired or wireless connections.

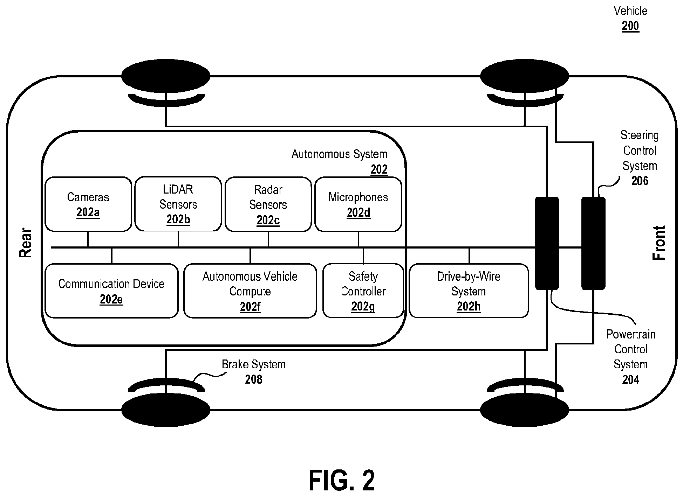

Vehicles 102a-102n (referred to individually as vehicle 102 and collectively as vehicles 102) include at least one device configured to transport goods and/or people. In some embodiments, vehicles 102 are configured to be in communication with V2I device 110, remote AV system 114, fleet management system 116, and/or V2I system 118 via network 112. In some embodiments, vehicles 102 include cars, buses, trucks, trains, and/or the like. In some embodiments, vehicles 102 are the same as, or similar to, vehicles 200, described herein (see FIG. 2). In some embodiments, a vehicle 200 of a set of vehicles 200 is associated with an autonomous fleet manager. In some embodiments, vehicles 102 travel along respective routes 106a-106n (referred to individually as route 106 and collectively as routes 106), as described herein. In some embodiments, one or more vehicles 102 include an autonomous system (e.g., an autonomous system that is the same as or similar to autonomous system 202).

Objects 104a-104n (referred to individually as object 104 and collectively as objects 104) include, for example, at least one vehicle, at least one pedestrian, at least one cyclist, at least one structure (e.g., a building, a sign, a fire hydrant, etc.), and/or the like. Each object 104 is stationary (e.g., located at a fixed location for a period of time) or mobile (e.g., having a velocity and associated with at least one trajectory). In some embodiments, objects 104 are associated with corresponding locations in area 108.

Routes 106a-106n (referred to individually as route 106 and collectively as routes 106) are each associated with (e.g., prescribe) a sequence of actions (also known as a trajectory) connecting states along which an AV can navigate. Each route 106 starts at an initial state (e.g., a state that corresponds to a first spatiotemporal location, velocity, and/or the like) and ends at a final goal state (e.g., a state that corresponds to a second spatiotemporal location that is different from the first spatiotemporal location) or goal region (e.g. a subspace of acceptable states (e.g., terminal states)). In some embodiments, the first state includes a location at which an individual or individuals are to be picked-up by the AV and the second state or region includes a location or locations at which the individual or individuals picked-up by the AV are to be dropped-off. In some embodiments, routes 106 include a plurality of acceptable state sequences (e.g., a plurality of spatiotemporal location sequences), the plurality of state sequences associated with (e.g., defining) a plurality of trajectories. In an example, routes 106 include only high level actions or imprecise state locations, such as a series of connected roads dictating turning directions at roadway intersections. Additionally, or alternatively, routes 106 may include more precise actions or states such as, for example, specific target lanes or precise locations within the lane areas and targeted speed at those positions. In an example, routes 106 include a plurality of precise state sequences along the at least one high level action sequence with a limited lookahead horizon to reach intermediate goals, where the combination of successive iterations of limited horizon state sequences cumulatively correspond to a plurality of trajectories that collectively form the high level route to terminate at the final goal state or region.

Area 108 includes a physical area (e.g., a geographic region) within which vehicles 102 can navigate. In an example, area 108 includes at least one state (e.g., a country, a province, an individual state of a plurality of states included in a country, etc.), at least one portion of a state, at least one city, at least one portion of a city, etc. In some embodiments, area 108 includes at least one named thoroughfare (referred to herein as a "road") such as a highway, an interstate highway, a parkway, a city street, etc. Additionally, or alternatively, in some examples area 108 includes at least one unnamed road such as a driveway, a section of a parking lot, a section of a vacant and/or undeveloped lot, a dirt path, etc. In some embodiments, a road includes at least one lane (e.g., a portion of the road that can be traversed by vehicles 102). In an example, a road includes at least one lane associated with (e.g., identified based on) at least one lane marking.

Vehicle-to-Infrastructure (V2I) device 110 (sometimes referred to as a Vehicle-to-Infrastructure or Vehicle-to-Everything (V2X) device) includes at least one device configured to be in communication with vehicles 102 and/or V2I infrastructure system 118. In some embodiments, V2I device 110 is configured to be in communication with vehicles 102, remote AV system 114, fleet management system 116, and/or V2I system 118 via network 112. In some embodiments, V2I device 110 includes a radio frequency identification (RFID) device, signage, cameras (e.g., two-dimensional (2D) and/or three-dimensional (3D) cameras), lane markers, streetlights, parking meters, etc. In some embodiments, V2I device 110 is configured to communicate directly with vehicles 102. Additionally, or alternatively, in some embodiments V2I device 110 is configured to communicate with vehicles 102, remote AV system 114, and/or fleet management system 116 via V2I system 118. In some embodiments, V2I device 110 is configured to communicate with V2I system 118 via network 112.

Network 112 includes one or more wired and/or wireless networks. In an example, network 112 includes a cellular network (e.g., a long term evolution (LTE) network, a third generation (3G) network, a fourth generation (4G) network, a fifth generation (5G) network, a code division multiple access (CDMA) network, etc.), a public land mobile network (PLMN), a local area network (LAN), a wide area network (WAN), a metropolitan area network (MAN), a telephone network (e.g., the public switched telephone network (PSTN), a private network, an ad hoc network, an intranet, the Internet, a fiber optic-based network, a cloud computing network, etc., a combination of some or all of these networks, and/or the like.

Remote AV system 114 includes at least one device configured to be in communication with vehicles 102, V2I device 110, network 112, fleet management system 116, and/or V2I system 118 via network 112. In an example, remote AV system 114 includes a server, a group of servers, and/or other like devices. In some embodiments, remote AV system 114 is co-located with the fleet management system 116. In some embodiments, remote AV system 114 is involved in the installation of some or all of the components of a vehicle, including an autonomous system, an autonomous vehicle compute, software implemented by an autonomous vehicle compute, and/or the like. In some embodiments, remote AV system 114 maintains (e.g., updates and/or replaces) such components and/or software during the lifetime of the vehicle.

Fleet management system 116 includes at least one device configured to be in communication with vehicles 102, V2I device 110, remote AV system 114, and/or V2I infrastructure system 118. In an example, fleet management system 116 includes a server, a group of servers, and/or other like devices. In some embodiments, fleet management system 116 is associated with a ridesharing company (e.g., an organization that controls operation of multiple vehicles (e.g., vehicles that include autonomous systems and/or vehicles that do not include autonomous systems) and/or the like).

In some embodiments, V2I system 118 includes at least one device configured to be in communication with vehicles 102, V2I device 110, remote AV system 114, and/or fleet management system 116 via network 112. In some examples, V2I system 118 is configured to be in communication with V2I device 110 via a connection different from network 112. In some embodiments, V2I system 118 includes a server, a group of servers, and/or other like devices. In some embodiments, V2I system 118 is associated with a municipality or a private institution (e.g., a private institution that maintains V2I device 110 and/or the like).

The number and arrangement of elements illustrated in FIG. 1 are provided as an example. There can be additional elements, fewer elements, different elements, and/or differently arranged elements, than those illustrated in FIG. 1. Additionally, or alternatively, at least one element of environment 100 can perform one or more functions described as being performed by at least one different element of FIG. 1. Additionally, or alternatively, at least one set of elements of environment 100 can perform one or more functions described as being performed by at least one different set of elements of environment 100.

Referring now to FIG. 2, vehicle 200 (which may be the same as, or similar to vehicles 102 of FIG. 1) includes or is associated with autonomous system 202, powertrain control system 204, steering control system 206, and brake system 208. In some embodiments, vehicle 200 is the same as or similar to vehicle 102 (*see* FIG. 1). In some embodiments, autonomous system 202 is configured to confer vehicle 200 autonomous driving capability (e.g., implement at least one driving automation or maneuver-based function, feature, device, and/or the like that enable vehicle 200 to be partially or fully operated without human intervention including, without limitation, fully autonomous vehicles (e.g., vehicles that forego reliance on human intervention such as Level 5 ADS-operated vehicles), highly autonomous vehicles (e.g., vehicles that forego reliance on human intervention in certain situations such as Level 4 ADS-operated vehicles), conditional autonomous vehicles (e.g., vehicles that forego reliance on human intervention in limited situations such as Level 3 ADS-operated vehicles) and/or the like. In one embodiment, autonomous system 202 includes operation or tactical functionality required to operate vehicle 200 in on-road traffic and perform part or all of Dynamic Driving Task (DDT) on a sustained basis. In another embodiment, autonomous system 202 includes an Advanced Driver Assistance System (ADAS) that includes driver support features. Autonomous system 202 supports various levels of driving automation, ranging from no driving automation (e.g., Level 0) to full driving automation (e.g., Level 5). For a detailed description of fully autonomous vehicles and highly autonomous vehicles, reference may be made to SAE International's standard J3016: Taxonomy and Definitions for Terms Related to On-Road Motor Vehicle Automated Driving Systems. In some embodiments, vehicle 200 is associated with an autonomous fleet manager and/or a ridesharing company.

Autonomous system 202 includes a sensor suite that includes one or more devices such as cameras 202a, LiDAR sensors 202b, radar sensors 202c, and microphones 202d. In some embodiments, autonomous system 202 can include more or fewer devices and/or different devices (e.g., ultrasonic sensors, inertial sensors, GPS receivers (discussed below), odometry sensors that generate data associated with an indication of a distance that vehicle 200 has traveled, and/or the like). In some embodiments, autonomous system 202 uses the one or more devices included in autonomous system 202 to generate data associated with environment 100, described herein. The data generated by the one or more devices of autonomous system 202 can be used by one or more systems described herein to observe the environment (e.g., environment 100) in which vehicle 200 is located. In some embodiments, autonomous system 202 includes communication device 202e, autonomous vehicle compute 202f, drive-by-wire (DBW) system 202h, and safety controller 202g.

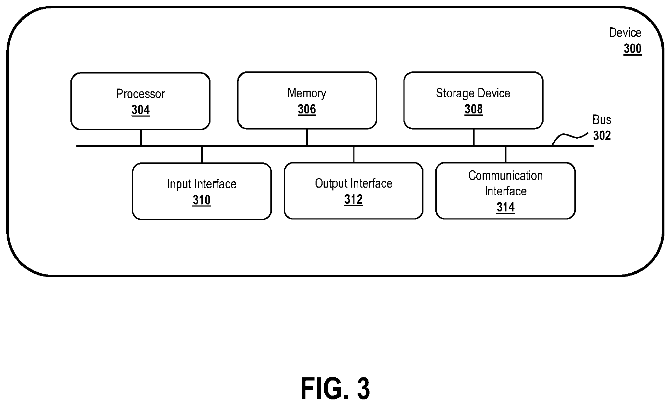

Cameras 202a include at least one device configured to be in communication with communication device 202e, autonomous vehicle compute 202f, and/or safety controller 202g via a bus (e.g., a bus that is the same as or similar to bus 302 of FIG. 3). Cameras 202a include at least one camera (e.g., a digital camera using a light sensor such as a Charged-Coupled Device (CCD), a thermal camera, an infrared (IR) camera, an event camera, and/or the like) to capture images including physical objects (e.g., cars, buses, curbs, people, and/or the like). In some embodiments, camera 202a generates camera data as output. In some examples, camera 202a generates camera data that includes image data associated with an image. In this example, the image data may specify at least one parameter (e.g., image characteristics such as exposure, brightness, etc., an image timestamp, and/or the like) corresponding to the image. In such an example, the image may be in a format (e.g., RAW, JPEG, PNG, and/or the like). In some embodiments, camera 202a includes a plurality of independent cameras configured on (e.g., positioned on) a vehicle to capture images for the purpose of stereopsis (stereo vision). In some examples, camera 202a includes a plurality of cameras that generate image data and transmit the image data to autonomous vehicle compute 202f and/or a fleet management system (e.g., a fleet management system that is the same as or similar to fleet management system 116 of FIG. 1). In such an example, autonomous vehicle compute 202f determines depth to one or more objects in a field of view of at least two cameras of the plurality of cameras based on the image data from the at least two cameras. In some embodiments, cameras 202a is configured to capture images of objects within a distance from cameras 202a (e.g., up to 100 meters, up to a kilometer, and/or the like). Accordingly, cameras 202a include features such as sensors and lenses that are optimized for perceiving objects that are at one or more distances from cameras 202a.

In an embodiment, camera 202a includes at least one camera configured to capture one or more images associated with one or more traffic lights, street signs and/or other physical objects that provide visual navigation information. In some embodiments, camera 202a generates traffic light data associated with one or more images. In some examples, camera 202a generates TLD (Traffic Light Detection) data associated with one or more images that include a format (e.g., RAW, JPEG, PNG, and/or the like). In some embodiments, camera 202a that generates TLD data differs from other systems described herein incorporating cameras in that camera 202a can include one or more cameras with a wide field of view (e.g., a wide-angle lens, a fish-eye lens, a lens having a viewing angle of approximately 120 degrees or more, and/or the like) to generate images about as many physical objects as possible.

Light Detection and Ranging (LiDAR) sensors 202b include at least one device configured to be in communication with communication device 202e, autonomous vehicle compute 202f, and/or safety controller 202g via a bus (e.g., a bus that is the same as or similar to bus 302 of FIG. 3). LiDAR sensors 202b include a system configured to transmit light from a light emitter (e.g., a laser transmitter). Light emitted by LiDAR sensors 202b include light (e.g., infrared light and/or the like) that is outside of the visible spectrum. In some embodiments, during operation, light emitted by LiDAR sensors 202b encounters a physical object (e.g., a vehicle) and is reflected back to LiDAR sensors 202b. In some embodiments, the light emitted by LiDAR sensors 202b does not penetrate the physical objects that the light encounters. LiDAR sensors 202b also include at least one light detector which detects the light that was emitted from the light emitter after the light encounters a physical object. In some embodiments, at least one data processing system associated with LiDAR sensors 202b generates an image (e.g., a point cloud, a combined point cloud, and/or the like) representing the objects included in a field of view of LiDAR sensors 202b. In some examples, the at least one data processing system associated with LiDAR sensor 202b generates an image that represents the boundaries of a physical object, the surfaces (e.g., the topology of the surfaces) of the physical object, and/or the like. In such an example, the image is used to determine the boundaries of physical objects in the field of view of LiDAR sensors 202b.

Radio Detection and Ranging (radar) sensors 202c include at least one device configured to be in communication with communication device 202e, autonomous vehicle compute 202f, and/or safety controller 202g via a bus (e.g., a bus that is the same as or similar to bus 302 of FIG. 3). Radar sensors 202c include a system configured to transmit radio waves (either pulsed or continuously). The radio waves transmitted by radar sensors 202c include radio waves that are within a predetermined spectrum In some embodiments, during operation, radio waves transmitted by radar sensors 202c encounter a physical object and are reflected back to radar sensors 202c. In some embodiments, the radio waves transmitted by radar sensors 202c are not reflected by some objects. In some embodiments, at least one data processing system associated with radar sensors 202c generates signals representing the objects included in a field of view of radar sensors 202c. For example, the at least one data processing system associated with radar sensor 202c generates an image that represents the boundaries of a physical object, the surfaces (e.g., the topology of the surfaces) of the physical object, and/or the like. In some examples, the image is used to determine the boundaries of physical objects in the field of view of radar sensors 202c.

Microphones 202d includes at least one device configured to be in communication with communication device 202e, autonomous vehicle compute 202f, and/or safety controller 202g via a bus (e.g., a bus that is the same as or similar to bus 302 of FIG. 3). Microphones 202d include one or more microphones (e.g., array microphones, external microphones, and/or the like) that capture audio signals and generate data associated with (e.g., representing) the audio signals. In some examples, microphones 202d include transducer devices and/or like devices. In some embodiments, one or more systems described herein can receive the data generated by microphones 202d and determine a position of an object relative to vehicle 200 (e.g., a distance and/or the like) based on the audio signals associated with the data.

Communication device 202e includes at least one device configured to be in communication with cameras 202a, LiDAR sensors 202b, radar sensors 202c, microphones 202d, autonomous vehicle compute 202f, safety controller 202g, and/or DBW (Drive-By-Wire) system 202h. For example, communication device 202e may include a device that is the same as or similar to communication interface 314 of FIG. 3. In some embodiments, communication device 202e includes a vehicle-to-vehicle (V2V) communication device (e.g., a device that enables wireless communication of data between vehicles).

Autonomous vehicle compute 202f include at least one device configured to be in communication with cameras 202a, LiDAR sensors 202b, radar sensors 202c, microphones 202d, communication device 202e, safety controller 202g, and/or DBW system 202h. In some examples, autonomous vehicle compute 202f includes a device such as a client device, a mobile device (e.g., a cellular telephone, a tablet, and/or the like), a server (e.g., a computing device including one or more central processing units, graphical processing units, and/or the like), and/or the like. In some embodiments, autonomous vehicle compute 202f is the same as or similar to autonomous vehicle compute 400, described herein. Additionally, or alternatively, in some embodiments autonomous vehicle compute 202f is configured to be in communication with an autonomous vehicle system (e.g., an autonomous vehicle system that is the same as or similar to remote AV system 114 of FIG. 1), a fleet management system (e.g., a fleet management system that is the same as or similar to fleet management system 116 of FIG. 1), a V2I device (e.g., a V2I device that is the same as or similar to V2I device 110 of FIG. 1), and/or a V2I system (e.g., a V2I system that is the same as or similar to V2I system 118 of FIG. 1).

Safety controller 202g includes at least one device configured to be in communication with cameras 202a, LiDAR sensors 202b, radar sensors 202c, microphones 202d, communication device 202e, autonomous vehicle computer 202f, and/or DBW system 202h. In some examples, safety controller 202g includes one or more controllers (electrical controllers, electromechanical controllers, and/or the like) that are configured to generate and/or transmit control signals to operate one or more devices of vehicle 200 (e.g., powertrain control system 204, steering control system 206, brake system 208, and/or the like). In some embodiments, safety controller 202g is configured to generate control signals that take precedence over (e.g., overrides) control signals generated and/or transmitted by autonomous vehicle compute 202f.

DBW system 202h includes at least one device configured to be in communication with communication device 202e and/or autonomous vehicle compute 202f. In some examples, DBW system 202h includes one or more controllers (e.g., electrical controllers, electromechanical controllers, and/or the like) that are configured to generate and/or transmit control signals to operate one or more devices of vehicle 200 (e.g., powertrain control system 204, steering control system 206, brake system 208, and/or the like). Additionally, or alternatively, the one or more controllers of DBW system 202h are configured to generate and/or transmit control signals to operate at least one different device (e.g., a turn signal, headlights, door locks, windshield wipers, and/or the like) of vehicle 200.

Powertrain control system 204 includes at least one device configured to be in communication with DBW system 202h. In some examples, powertrain control system 204 includes at least one controller, actuator, and/or the like. In some embodiments, powertrain control system 204 receives control signals from DBW system 202h and powertrain control system 204 causes vehicle 200 to make longitudinal vehicle motion, such as start moving forward, stop moving forward, start moving backward, stop moving backward, accelerate in a direction, decelerate in a direction or to make lateral vehicle motion such as performing a left turn, performing a right turn, and/or the like. In an example, powertrain control system 204 causes the energy (e.g., fuel, electricity, and/or the like) provided to a motor of the vehicle to increase, remain the same, or decrease, thereby causing at least one wheel of vehicle 200 to rotate or not rotate.

Steering control system 206 includes at least one device configured to rotate one or more wheels of vehicle 200. In some examples, steering control system 206 includes at least one controller, actuator, and/or the like. In some embodiments, steering control system 206 causes the front two wheels and/or the rear two wheels of vehicle 200 to rotate to the left or right to cause vehicle 200 to turn to the left or right. In other words, steering control system 206 causes activities necessary for the regulation of the y-axis component of vehicle motion.

Brake system 208 includes at least one device configured to actuate one or more brakes to cause vehicle 200 to reduce speed and/or remain stationary. In some examples, brake system 208 includes at least one controller and/or actuator that is configured to cause one or more calipers associated with one or more wheels of vehicle 200 to close on a corresponding rotor of vehicle 200. Additionally, or alternatively, in some examples brake system 208 includes an automatic emergency braking (AEB) system, a regenerative braking system, and/or the like.

In some embodiments, vehicle 200 includes at least one platform sensor (not explicitly illustrated) that measures or infers properties of a state or a condition of vehicle 200. In some examples, vehicle 200 includes platform sensors such as a global positioning system (GPS) receiver, an inertial measurement unit (IMU), a wheel speed sensor, a wheel brake pressure sensor, a wheel torque sensor, an engine torque sensor, a steering angle sensor, and/or the like. Although brake system 208 is illustrated to be located in the near side of vehicle 200 in FIG. 2, brake system 208 may be located anywhere in vehicle 200.

Referring now to FIG. 3, illustrated is a schematic diagram of a device 300. As illustrated, device 300 includes processor 304, memory 306, storage component 308, input interface 310, output interface 312, communication interface 314, and bus 302. In some embodiments, device 300 corresponds to at least one device of vehicles 102 (e.g., at least one device of a system of vehicles 102), at least one device of the vehicle 200 (e.g., at least one device of the autonomous system 202, the powertrain control system 204, the steering control system 206, and/or the brake system 208 of the vehicle 200), and/or one or more devices of network 112 (e.g., one or more devices of a system of network 112). In some embodiments, one or more devices of vehicles 102 (e.g., one or more devices of a system of vehicles 102), the vehicle 200, and/or one or more devices of network 112 (e.g., one or more devices of a system of network 112) include at least one device 300 and/or at least one component of device 300. As shown in FIG. 3, device 300 includes bus 302, processor 304, memory 306, storage component 308, input interface 310, output interface 312, and communication interface 314.

Bus 302 includes a component that permits communication among the components of device 300. In some cases, processor 304 includes a processor (e.g., a central processing unit (CPU), a graphics processing unit (GPU), an accelerated processing unit (APU), and/or the like), a microphone, a digital signal processor (DSP), and/or any processing component (e.g., a field-programmable gate array (FPGA), an application specific integrated circuit (ASIC), and/or the like) that can be programmed to perform at least one function. Memory 306 includes random access memory (RAM), read-only memory (ROM), and/or another type of dynamic and/or static storage device (e.g., flash memory, magnetic memory, optical memory, and/or the like) that stores data and/or instructions for use by processor 304.

Storage component 308 stores data and/or software related to the operation and use of device 300. In some examples, storage component 308 includes a hard disk (e.g., a magnetic disk, an optical disk, a magneto-optic disk, a solid state disk, and/or the like), a compact disc (CD), a digital versatile disc (DVD), a floppy disk, a cartridge, a magnetic tape, a CD-ROM, RAM, PROM, EPROM, FLASH-EPROM, NV-RAM, and/or another type of computer readable medium, along with a corresponding drive.

Input interface 310 includes a component that permits device 300 to receive information, such as via user input (e.g., a touchscreen display, a keyboard, a keypad, a mouse, a button, a switch, a microphone, a camera, and/or the like). Additionally or alternatively, in some embodiments input interface 310 includes a sensor that senses information (e.g., a global positioning system (GPS) receiver, an accelerometer, a gyroscope, an actuator, and/or the like). Output interface 312 includes a component that provides output information from device 300 (e.g., a display, a speaker, one or more light-emitting diodes (LEDs), and/or the like).

In some embodiments, communication interface 314 includes a transceiver-like component (e.g., a transceiver, a separate receiver and transmitter, and/or the like) that permits device 300 to communicate with other devices via a wired connection, a wireless connection, or a combination of wired and wireless connections. In some examples, communication interface 314 permits device 300 to receive information from another device and/or provide information to another device. In some examples, communication interface 314 includes an Ethernet interface, an optical interface, a coaxial interface, an infrared interface, a radio frequency (RF) interface, a universal serial bus (USB) interface, a Wi-Fi^{®} interface, a cellular network interface, and/or the like.

In some embodiments, device 300 performs one or more processes described herein. Device 300 performs these processes based on processor 304 executing software instructions stored by a computer-readable medium, such as memory 306 and/or storage component 308. A computer-readable medium (e.g., a non-transitory computer readable medium) is defined herein as a non-transitory memory device. A non-transitory memory device includes memory space located inside a single physical storage device or memory space spread across multiple physical storage devices.

In some embodiments, software instructions are read into memory 306 and/or storage component 308 from another computer-readable medium or from another device via communication interface 314. When executed, software instructions stored in memory 306 and/or storage component 308 cause processor 304 to perform one or more processes described herein. Additionally or alternatively, hardwired circuitry is used in place of or in combination with software instructions to perform one or more processes described herein. Thus, embodiments described herein are not limited to any specific combination of hardware circuitry and software unless explicitly stated otherwise.

Memory 306 and/or storage component 308 includes data storage or at least one data structure (e.g., a database and/or the like). Device 300 is capable of receiving information from, storing information in, communicating information to, or searching information stored in the data storage or the at least one data structure in memory 306 or storage component 308. In some examples, the information includes network data, input data, output data, or any combination thereof.

In some embodiments, device 300 is configured to execute software instructions that are either stored in memory 306 and/or in the memory of another device (e.g., another device that is the same as or similar to device 300). As used herein, the term "module" refers to at least one instruction stored in memory 306 and/or in the memory of another device that, when executed by processor 304 and/or by a processor of another device (e.g., another device that is the same as or similar to device 300) cause device 300 (e.g., at least one component of device 300) to perform one or more processes described herein. In some embodiments, a module is implemented in software, firmware, hardware, and/or the like.

The number and arrangement of components illustrated in FIG. 3 are provided as an example. In some embodiments, device 300 can include additional components, fewer components, different components, or differently arranged components than those illustrated in FIG. 3. Additionally or alternatively, a set of components (e.g., one or more components) of device 300 can perform one or more functions described as being performed by another component or another set of components of device 300.

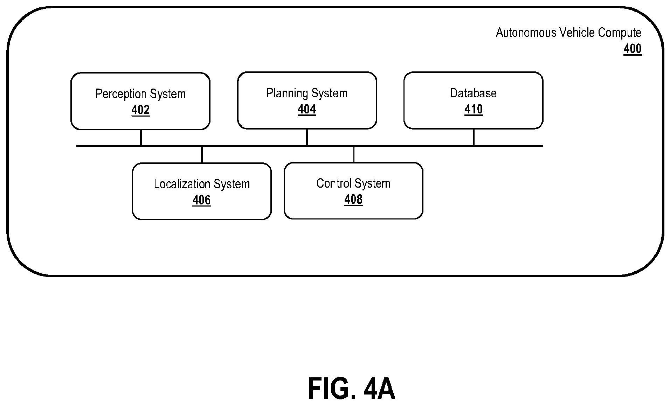

Referring now to FIG. 4A, illustrated is an example block diagram of an autonomous vehicle compute 400 (sometimes referred to as an "AV stack"). As illustrated, autonomous vehicle compute 400 includes perception system 402 (sometimes referred to as a perception module), planning system 404 (sometimes referred to as a planning module), localization system 406 (sometimes referred to as a localization module), control system 408 (sometimes referred to as a control module), and database 410. In some embodiments, perception system 402, planning system 404, localization system 406, control system 408, and database 410 are included and/or implemented in an autonomous navigation system of a vehicle (e.g., autonomous vehicle compute 202f of vehicle 200). Additionally, or alternatively, in some embodiments perception system 402, planning system 404, localization system 406, control system 408, and database 410 are included in one or more standalone systems (e.g., one or more systems that are the same as or similar to autonomous vehicle compute 400 and/or the like). In some examples, perception system 402, planning system 404, localization system 406, control system 408, and database 410 are included in one or more standalone systems that are located in a vehicle and/or at least one remote system as described herein. In some embodiments, any and/or all of the systems included in autonomous vehicle compute 400 are implemented in software (e.g., in software instructions stored in memory), computer hardware (e.g., by microprocessors, microcontrollers, application-specific integrated circuits (ASICs), Field Programmable Gate Arrays (FPGAs), and/or the like), or combinations of computer software and computer hardware. It will also be understood that, in some embodiments, autonomous vehicle compute 400 is configured to be in communication with a remote system (e.g., an autonomous vehicle system that is the same as or similar to remote AV system 114, a fleet management system 116 that is the same as or similar to fleet management system 116, a V2I system that is the same as or similar to V2I system 118, and/or the like).

In some embodiments, perception system 402 receives data associated with at least one physical object (e.g., data that is used by perception system 402 to detect the at least one physical object) in an environment and classifies the at least one physical object. In some examples, perception system 402 receives image data captured by at least one camera (e.g., cameras 202a), the image associated with (e.g., representing) one or more physical objects within a field of view of the at least one camera. In such an example, perception system 402 classifies at least one physical object based on one or more groupings of physical objects (e.g., bicycles, vehicles, traffic signs, pedestrians, and/or the like). In some embodiments, perception system 402 transmits data associated with the classification of the physical objects to planning system 404 based on perception system 402 classifying the physical objects.

In some embodiments, planning system 404 receives data associated with a destination and generates data associated with at least one route (e.g., routes 106) along which a vehicle (e.g., vehicles 102) can travel along toward a destination. In some embodiments, planning system 404 periodically or continuously receives data from perception system 402 (e.g., data associated with the classification of physical objects, described above) and planning system 404 updates the at least one trajectory or generates at least one different trajectory based on the data generated by perception system 402. In other words, planning system 404 may perform tactical function-related tasks that are required to operate vehicle 102 in on-road traffic. Tactical efforts involve maneuvering the vehicle in traffic during a trip, including but not limited to deciding whether and when to overtake another vehicle, change lanes, or selecting an appropriate speed, acceleration, deacceleration, etc. In some embodiments, planning system 404 receives data associated with an updated position of a vehicle (e.g., vehicles 102) from localization system 406 and planning system 404 updates the at least one trajectory or generates at least one different trajectory based on the data generated by localization system 406.

In some embodiments, localization system 406 receives data associated with (e.g., representing) a location of a vehicle (e.g., vehicles 102) in an area. In some examples, localization system 406 receives LiDAR data associated with at least one point cloud generated by at least one LiDAR sensor (e.g., LiDAR sensors 202b). In certain examples, localization system 406 receives data associated with at least one point cloud from multiple LiDAR sensors and localization system 406 generates a combined point cloud based on each of the point clouds. In these examples, localization system 406 compares the at least one point cloud or the combined point cloud to two-dimensional (2D) and/or a three-dimensional (3D) map of the area stored in database 410. Localization system 406 then determines the position of the vehicle in the area based on localization system 406 comparing the at least one point cloud or the combined point cloud to the map. In some embodiments, the map includes a combined point cloud of the area generated prior to navigation of the vehicle. In some embodiments, maps include, without limitation, high-precision maps of the roadway geometric properties, maps describing road network connectivity properties, maps describing roadway physical properties (such as traffic speed, traffic volume, the number of vehicular and cyclist traffic lanes, lane width, lane traffic directions, or lane marker types and locations, or combinations thereof), and maps describing the spatial locations of road features such as crosswalks, traffic signs or other travel signals of various types. In some embodiments, the map is generated in real-time based on the data received by the perception system.

In another example, localization system 406 receives Global Navigation Satellite System (GNSS) data generated by a global positioning system (GPS) receiver. In some examples, localization system 406 receives GNSS data associated with the location of the vehicle in the area and localization system 406 determines a latitude and longitude of the vehicle in the area. In such an example, localization system 406 determines the position of the vehicle in the area based on the latitude and longitude of the vehicle. In some embodiments, localization system 406 generates data associated with the position of the vehicle. In some examples, localization system 406 generates data associated with the position of the vehicle based on localization system 406 determining the position of the vehicle. In such an example, the data associated with the position of the vehicle includes data associated with one or more semantic properties corresponding to the position of the vehicle.

In some embodiments, control system 408 receives data associated with at least one trajectory from planning system 404 and control system 408 controls operation of the vehicle. In some examples, control system 408 receives data associated with at least one trajectory from planning system 404 and control system 408 controls operation of the vehicle by generating and transmitting control signals to cause a powertrain control system (e.g., DBW system 202h, powertrain control system 204, and/or the like), a steering control system (e.g., steering control system 206), and/or a brake system (e.g., brake system 208) to operate. For example, control system 408 is configured to perform operational functions such as a lateral vehicle motion control or a longitudinal vehicle motion control. The lateral vehicle motion control causes activities necessary for the regulation of the y-axis component of vehicle motion. The longitudinal vehicle motion control causes activities necessary for the regulation of the x-axis component of vehicle motion. In an example, where a trajectory includes a left turn, control system 408 transmits a control signal to cause steering control system 206 to adjust a steering angle of vehicle 200, thereby causing vehicle 200 to turn left. Additionally, or alternatively, control system 408 generates and transmits control signals to cause other devices (e.g., headlights, turn signal, door locks, windshield wipers, and/or the like) of vehicle 200 to change states.

In some embodiments, perception system 402, planning system 404, localization system 406, and/or control system 408 implement at least one machine learning model (e.g., at least one multilayer perceptron (MLP), at least one convolutional neural network (CNN), at least one recurrent neural network (RNN), at least one autoencoder, at least one transformer, and/or the like). In some examples, perception system 402, planning system 404, localization system 406, and/or control system 408 implement at least one machine learning model alone or in combination with one or more of the above-noted systems. In some examples, perception system 402, planning system 404, localization system 406, and/or control system 408 implement at least one machine learning model as part of a pipeline (e.g., a pipeline for identifying one or more objects located in an environment and/or the like).

Database 410 stores data that is transmitted to, received from, and/or updated by perception system 402, planning system 404, localization system 406 and/or control system 408. In some examples, database 410 includes a storage component (e.g., a storage component that is the same as or similar to storage component 308 of FIG. 3) that stores data and/or software related to the operation and uses at least one system of autonomous vehicle compute 400. In some embodiments, database 410 stores data associated with 2D and/or 3D maps of at least one area. In some examples, database 410 stores data associated with 2D and/or 3D maps of a portion of a city, multiple portions of multiple cities, multiple cities, a county, a state, a State (e.g., a country), and/or the like). In such an example, a vehicle (e.g., a vehicle that is the same as or similar to vehicles 102 and/or vehicle 200) can drive along one or more drivable regions (e.g., single-lane roads, multi-lane roads, highways, back roads, off road trails, and/or the like) and cause at least one LiDAR sensor (e.g., a LiDAR sensor that is the same as or similar to LiDAR sensors 202b) to generate data associated with an image representing the objects included in a field of view of the at least one LiDAR sensor.

In some embodiments, database 410 can be implemented across a plurality of devices. In some examples, database 410 is included in a vehicle (e.g., a vehicle that is the same as or similar to vehicles 102 and/or vehicle 200), an autonomous vehicle system (e.g., an autonomous vehicle system that is the same as or similar to remote AV system 114, a fleet management system (e.g., a fleet management system that is the same as or similar to fleet management system 116 of FIG. 1, a V2I system (e.g., a V2I system that is the same as or similar to V2I system 118 of FIG. 1) and/or the like.

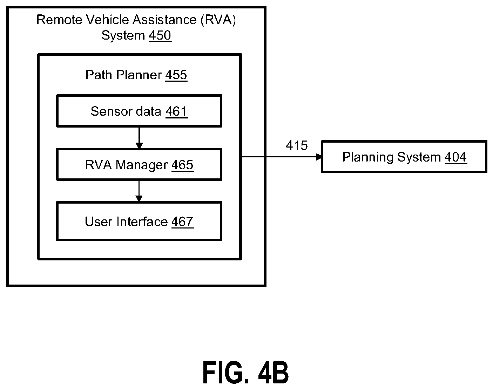

Referring now to FIG. 4B, illustrated is a block diagram of an example of a remote vehicle assistance (RVA) system 450. In some embodiments, the remote vehicle assistance system 450 may be communicatively coupled with vehicles 102a-102n and/or vehicles 200, objects 104a-104n, routes 106a-106n, area 108, vehicle-to-infrastructure (V2I) device 110, network 112, remote autonomous vehicle (AV) system 114, fleet management system 116, and/or V2I system 118. In some embodiments, the remote vehicle assistance system 450 may include, form a part of, be coupled to, and/or use vehicles 102a-102n and/or vehicles 200, objects 104a-104n, routes 106a-106n, area 108, vehicle-to-infrastructure (V2I) device 110, network 112, remote autonomous vehicle (AV) system 114, fleet management system 116, and/or V2I system 118.

As shown in FIG. 4B, the remote vehicle assistance system 450 may include a path planner 455 configured to acquire and process sensor data from one or more sensors 202 affixed to the vehicle. In some embodiments, the sensor data may be used to determine and provide a proposed trajectory 415 for the vehicle to navigate from a current position, such as a position at which it is stuck and has requested remote vehicle assistance, to a goal location that the vehicle is attempting to navigate toward. In some cases, the proposed trajectory 415 may be generated based on one or more inputs received from a remote assistance operator via a user interface 467, such as a graphic user interface (GUI), of the path planner 455. The operator can manipulate, e.g., alter, re-draw, add, or delete, one or more aspects of the proposed trajectory 415. The operator can adjust or alter the proposed trajectory 415 to maximize the likelihood that the proposed trajectory 415 is accepted by the planning system 404 of the vehicle to provide continued autonomous navigation from the stuck location. The operator can then select the proposed trajectory 415 to be provided to the vehicle for navigation through or away from the location at which it is stuck (or has otherwise requested remote vehicle assistance). The operator can determine or otherwise select the proposed trajectory 415 based on the sensor data 461, as well as costs and constraints that can be associated with one or more of the proposed trajectory 415 provided to the operator via the user interface 467.

Furthermore, as shown in FIG. 4B, the path planner 455 may include a remote vehicle assistance (RVA) manager 465, which processes the sensor data 461 to generate the proposed trajectory 415 in response to a request for remote vehicle assistance received from the vehicle. The remote vehicle assistance manager 465 can be configured to generate the proposed trajectory 415 to minimize the likelihood that the proposed trajectory 415 is rejected by the vehicle planning system 404. For example, in some cases, the remote vehicle assistance manager 465 can ensure that the proposed trajectory 415 satisfies one or more constraints imposed by the planning system 404. Alternatively and/or additionally, the remote vehicle assistance manager 465 may optimize the proposed trajectory 415 to minimize the cost associated with the proposed trajectory 415. The remote vehicle assistance manager 465 can also provide the proposed trajectory 415, as well as the costs and constraints associated with the proposed trajectory 415 for visualization in the user interface 467. In this way, the remote assistance operator can adjust or modify the proposed trajectory 415 in accordance with the costs and/or constraints associated with the proposed trajectory 415.

The path planner 455 can be subscribed to or otherwise receive data, such as status updates or remote vehicle assistance (RVA) requests, from other systems included in the autonomous vehicle computing system 400. In addition, the path planner 455 can read static configurations at startup and provide them as data feeds to the user interface 467. The path planner 455 can create visualizations of different possible trajectories, including the proposed trajectory 415, that include the costs and constraints associated with each trajectory. The visualizations can be provided via the user interface 467. The path planner 455 can also determine optimized, alternate trajectories and can provide the alternate trajectories via the user interface 467.

In some embodiments, the proposed trajectory 415 can be modified by a remote assistance operator via the user interface 467. For example, upon presentation of a visualization including the proposed trajectory 415, a remote assistance operator can adjust the proposed trajectory 415 with respect to one or more constraints imposed by the planning system 404, such as the location of a curb, a lane boundary, and/or a tracked object, so that the adjustments made to the proposed trajectory 415 avoid violating the one or more constraints. In some cases, the proposed trajectory 415 can be adjusted in its entirety. Alternatively and/or additionally, the adjustments made to the proposed trajectory 415 may include adjustments made to one or more individual segments of the proposed trajectory 415. Once the remote vehicle assistance manager 465 determines that the proposed trajectory 415 satisfies one or more constraints imposed by the planning system 404 of the vehicle, the remote assistance operator can then interact with the user interface 467 to select the proposed trajectory 415 for provision to the vehicle planning system 404. Although the proposed trajectory 415 may undergo further validation at the planning system 404, the validation performed by the remote vehicle assistance manager 465 maximizes the likelihood that the proposed trajectory 415 is accepted by the planning system 404 and executed to navigate the vehicle along a selected path.

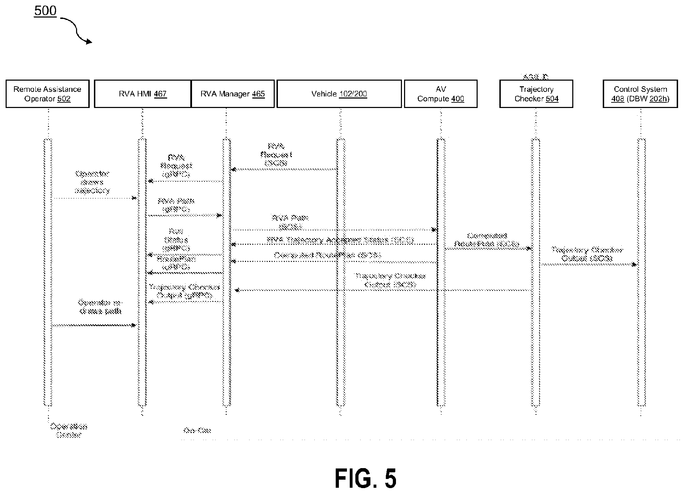

Referring now to FIG. 5, which depicts a sequence diagram illustrating an example of a process 500 for generating the proposed trajectory 415 at the remote vehicle assistance system 450. The example of the process 500 shown in FIG. 5 illustrates a scenario in which the proposed trajectory 415 generated by the remote vehicle assistance (RVA) manager 465 fails to satisfy one or more constraints of the planning system 404 of the autonomous vehicle compute 400 at the vehicle 102 or the vehicle 200 and is therefore rejected, for example, by a trajectory checker 504.

As shown in FIG. 5, upon receiving a remote vehicle assistance request from the vehicle 102 or the vehicle 200, the remote vehicle assistance manager 465 may generate the proposed trajectory 415 based on one or more user inputs received from a remote assistance operator 502 via the user interface 467. Nevertheless, in some cases, the proposed trajectory 415 may include one or more mistakes, such as overlapping a curb, exiting a drivable surface, colliding with an object, and/or the like, that prevent the proposed trajectory 415 from being validated by the trajectory checker 504 at the vehicle 102 or the vehicle 200. That is, where the proposed trajectory 415 is sent to the vehicle 102 or the vehicle 200 without any pre-validation at the remove vehicle assistance system 450, the proposed trajectory 415 may be rejected by the autonomous vehicle compute 400 when the trajectory checker 504 identifies the one or more mistakes present in the proposed trajectory 415. Accordingly, in response to the rejection of the proposed trajectory 415, the remote vehicle assistance system 450 may redraw the proposed trajectory 415 based on one or more additional user inputs received from the remote assistance operator 502 via the user interface 467. The validation of the proposed trajectory 415 at the trajectory checker 504 and the redrawing of the proposed trajectory 415 may continue until the proposed trajectory 415 satisfies the constraints imposed by the trajectory checker 504, at which point the proposed trajectory 415 may be deployed to the control system 408 and used to navigate the vehicle 102 or the vehicle 200.

Having the proposed trajectory 415 rejected by the trajectory checker 504 and redrawn at the remote vehicle assistance system 450 may impose significant delays (e.g., typically between one to three minutes). Accordingly, in some example embodiments, the remote vehicle assistance manager 465 may validate the proposed trajectory 415 before the proposed trajectory 415 is sent to the autonomous vehicle compute 400 of the vehicle 102 or the vehicle 200. For example, the remote vehicle assistance manager 465 may determine, based on data received from the autonomous vehicle compute 400, one or more constraints imposed by the trajectory checker 504 when validating the proposed trajectory 415. Moreover, the remote vehicle assistance manager 465 may validate the proposed trajectory 415 to ensure that the proposed trajectory 415 satisfies one or more constraints imposed by the trajectory checker 504 such as, for example, the proposed trajectory 415 being within a drivable surface, not colliding with one or more objects present in a surrounding environment, remaining within a lane boundary, and/or the like. Doing so may minimize the likelihood that the proposed trajectory 415 sent to the autonomous vehicle compute 400 of the vehicle 102 or the vehicle 200 is rejected by the trajectory checker 504.

As noted, the remote vehicle assistance manager 465 may determine the one or more constraints imposed by the trajectory checker 504 based on data received from the autonomous vehicle compute 400. Examples of data received from the autonomous vehicle compute 400 may include one or more maps and objects being tracked by the autonomous vehicle compute 400. In some cases, the remote vehicle assistance manager 465 may identify, based at least on the lane and road segment annotations included in one or more maps received from the autonomous vehicle compute 400, drivable surfaces. Alternatively and/or additionally, the remote vehicle assistance manager 465 may determine the location details of one or more tracked objects which may include mobile objects such as other vehicles, cyclists, and pedestrians as well as immobile objects such as buildings, curbs, and street poles.

In some example embodiments, the remote vehicle assistance manager 465 may generate the user interface 467 to facilitate the provision of one or more user inputs defining the proposed trajectory 415. For example, in some cases, the user interface 467 may be generated to provide a visualization of the one or more constraints imposed by the trajectory checker 504 to increase the likelihood that the one or more user inputs received from the remote assistance operator 502 defines the proposed trajectory 415 to be consistent with the one or more constraints imposed by the trajectory checker 504.

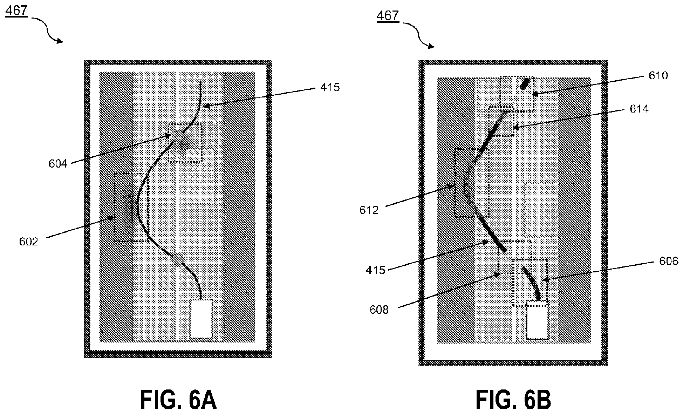

FIGS. 6A-D depicts screenshots of examples of the user interface 467. Referring now to FIG. 6A, illustrated is an example of the user interface 467 providing one or more explicit visual indicators whose color and/or shape are indicative of the cost associated with one or more corresponding segments of the proposed trajectory 415. In some cases, the one or more explicit visual indicators may identify segments of the proposed trajectory 415 having an above-threshold cost due to a violation of one or more constraints imposed by the trajectory checker 504. In the example shown in FIG. 6A, the user interface 467 may be rendered with a first visual indicator 602 identifying a first segment of the proposed trajectory 415 having an above-threshold cost due to proximity to a curb and a second visual indicator 604 identifying a second segment of the proposed trajectory 415 having an above-threshold cost due to proximity to another object (e.g., another vehicle in this example).

Referring now to FIG. 6B, illustrated is another example of the user interface 467 providing one or more implicit visual indicators whose color and/or shape are indicative of the cost associated with one or more corresponding segments of the proposed trajectory 415. In the example shown in FIG. 6B, each segment of the proposed trajectory 415 may be rendered in a color corresponding to a cost associated with that segment of the proposed trajectory 415. In some cases, a segment of the proposed trajectory 415 may be rendered in a first color if that segment of the proposed trajectory 415 does not violate any of the constraints imposed by the trajectory checker 504 and is associated with a below-threshold cost. The same segment of the proposed trajectory 415 may be rendered in a second color if that segment of the proposed trajectory 415 violates one or more constraints imposed by the trajectory checker 504 and is associated with an above-threshold cost. Alternatively and/or additionally, each segment of the proposed trajectory 415 may be rendered in a color corresponding to a constraint violated by the segment of the proposed trajectory 415. In the example shown in FIG. 6B, a first segment 606 of the proposed trajectory 415 may be rendered in a first color (blue) to indicate that the first segment 606 violates the constraint of having a too tight turn radius, a second segment 608 and a third segment 610 of the proposed trajectory 415 may be rendered in a second color (amber) to indicate that the second segment 608 and the third segment 610 violate the constraint of crossing a lane boundary, a fourth segment 612 of the proposed trajectory 415 may be rendered in a third color (e.g., purple) to indicate that the fourth segment 612 violate the constraint of overlapping a curb, and a fifth segment 614 of the proposed trajectory 415 may be rendered in a fourth color (e.g., red) to indicate that the fifth segment 614 violates the constraint of being too close to another object (e.g., another vehicle in this example).

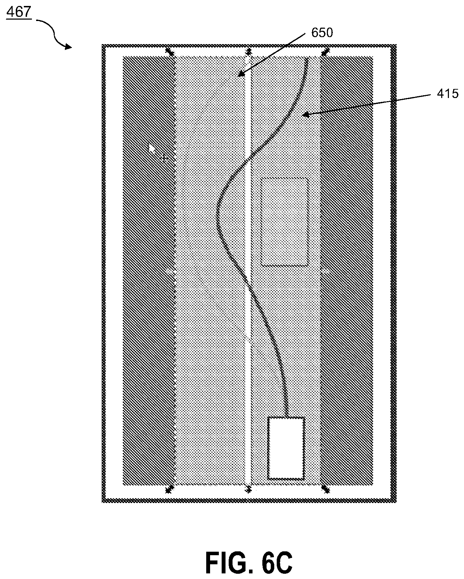

Referring now to FIG. 6C, illustrated is another example of the user interface 467 providing a visual indicator 650 demarcating a region in which to draw a trajectory consistent with one or more constraints imposed by the trajectory checker 504. In some example embodiments, the remote vehicle assistance manager 465 may determine a region of valid trajectories based on the extremes of the one or more constraints imposed by the trajectory checker 504. For instance, in some cases, the remote vehicle assistance manager 465 may determine a region of valid trajectories (e.g., an envelope of valid trajectories) based on a minimum turning radius of the vehicle 102 or vehicle 200 and a minimum clearance from one or more curbs, lane boundaries, and objects (e.g., other vehicles, cyclists, pedestrians, buildings, street poles, and/or the like). As shown in FIG. 6C, the one or more user inputs received from the remote assistance operator 502 may define the proposed trajectory 415 by at least setting, within the region delineated by the visual indicator 650, one or more nodes and segments of the proposed trajectory 415.

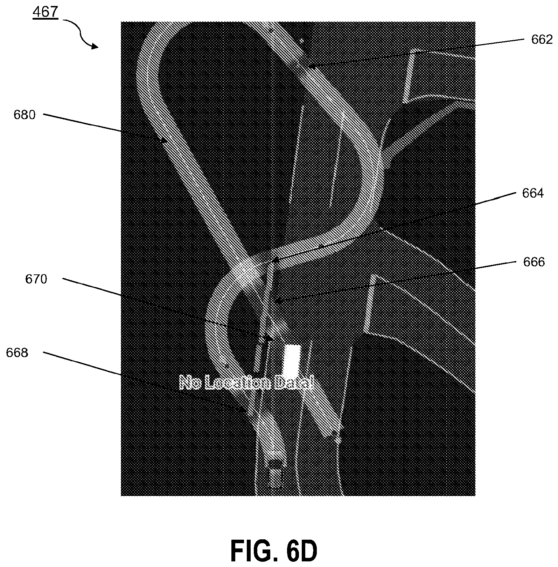

FIG. 6D depicts another example of the user interface 467 providing various visual indicators 662, 664, 666, 668, and 670 indicating where a trajectory 680 violates one or more constraints imposed by the trajectory checker 504. In the example shown in FIG. 6D, the visual indicators 662, 664, 666, and 668 indicate segments of the trajectory 680 that exits a drivable surface. Meanwhile, the visual indicator 670 indicates a segment of the trajectory 680 that collides with an object.

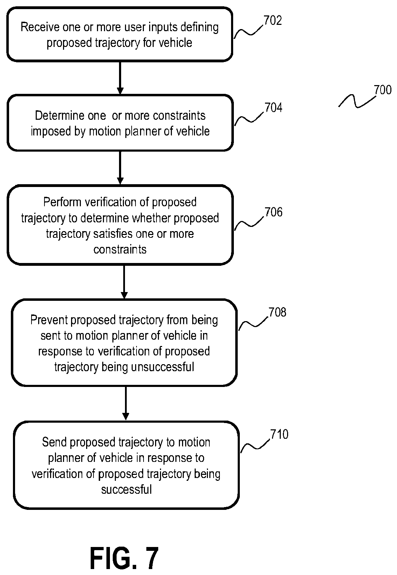

FIG. 7 depicts a flowchart illustrating an example of a process 700 for generating a trajectory for a vehicle at a remote vehicle assistance system. Referring to FIGS. 1-7, the process 700 may be performed by the remote vehicle assistance system 450, for example, by the remote vehicle assistance manager 465 of the path planner 455.

At 702, the remote vehicle assistance manager 465 may receive one or more user inputs defining a proposed trajectory for a vehicle. For example, the remote vehicle assistance manager 465 may receive, via the user interface 467, one or more user inputs defining the proposed trajectory 415. In some example embodiments, the remote vehicle assistance manager 465 may generate the user interface 467 to facilitate the provision of one or more user inputs defining the proposed trajectory 415. For instance, the user interface 467 may be generated to provide a visualization of the one or more constraints imposed by the trajectory checker 504 of the vehicle 102 or the vehicle 200. The visualization may include, for example, one or more visual indicators indicative of the cost associated with various segments of the proposed trajectory 415. In the examples shown in FIGS. 6A-B, these visual indicators may identify segments of the proposed trajectory 415 that fail to satisfy the constraints imposed by the trajectory checker 504 and are therefore associated with an above-threshold cost. Furthermore, in some cases, these visual indicators may identify the specific constraints violated by each segment of the proposed trajectory 415. Instead of and/or in addition to the visual indicators of cost, the remote vehicle assistance manager 465 may generate the user interface 467 to provide a visual indicator demarcating the region in which to draw the proposed trajectory 415 to be consistent with the one or more constraints imposed by the trajectory checker 504. Accordingly, the one or more user inputs received via the user interface 467 may set, within the region delineated by the visual indicator, one or more nodes and segments of the proposed trajectory 415.

At 704, the remote vehicle assistance manager 465 may determine one or more constraints imposed by a motion planner of the vehicle. In some example embodiments, the remote vehicle assistance manager 465 may determine the one or more constraints imposed by the trajectory checker 504 based at least on data received from the autonomous vehicle compute 400 of the vehicle 102 or the vehicle 200. In some cases, the data received from the autonomous vehicle compute 400 may include one or more maps and the remote vehicle assistance manager 465 may identify drivable surfaces based at least on the lane and road segment annotations included in the one or more maps received from the autonomous vehicle compute 400. Alternatively and/or additionally, the data received from the autonomous vehicle compute 400 may include one or more objects being tracked by the autonomous vehicle compute 400, in which case the remote vehicle assistance manager 465 may determine the location details of the one or more tracked objects.

At 706, the remote vehicle assistance manager 465 may perform a verification of the proposed trajectory to determine whether the proposed trajectory satisfies the one or more constraints. For instance, in some example embodiments, the remote vehicle assistance manager 465 may validate the proposed trajectory 415 to ensure that the proposed trajectory 415 does not include one or more mistakes, such as overlapping a curb, exiting a drivable surface, colliding with an object, and/or the like, that prevent the proposed trajectory 415 from being validated by the trajectory checker 504 at the vehicle 102 or the vehicle 200.

At 708, the remote vehicle assistance manager 465 may prevent the proposed trajectory from being sent to the motion planner of vehicle in response to the verification of the proposed trajectory being unsuccessful. In some example embodiments, the remote vehicle assistance manager 465 may avoid sending the proposed trajectory 415 to the autonomous vehicle compute 400 of the vehicle 102 or the vehicle 200 if the proposed trajectory 415 is determined to include one or more mistakes, such as overlapping a curb, exiting a drivable surface, colliding with an object, and/or the like, that prevent the proposed trajectory 415 from being validated by the trajectory checker 504 at the vehicle 102 or the vehicle 200. In instances where the remote vehicle assistance manager 465 is unable to validate the proposed trajectory 415, the remote vehicle assistance manager 465 may generate a notification to redraw the proposed trajectory. Accordingly, in some cases, the remote vehicle assistance manager 465 may receive, via the user interface 467, one or more user inputs redrawing the proposed trajectory 415 to better comply with the one or more constraints imposed by the trajectory checker 504. Moreover, the remote vehicle assistance manager 465 may validate the redrawn trajectory and send the redrawn trajectory to the autonomous vehicle compute 400 of the vehicle 102 or the vehicle 200 if the redrawn trajectory is determined to comply with the one or more constraints imposed by the trajectory checker 504.

At 710, the remote vehicle assistance manager 465 may send the proposed trajectory to the motion planner of the vehicle in response to the verification of the proposed trajectory being successful. In some example embodiments, the remote vehicle assistance manager 465 may send, to the autonomous vehicle compute 400 at the vehicle 102 or the vehicle 200, the proposed trajectory 415 if the proposed trajectory 415 is determined to comply with the one or more constraints of the trajectory checker 504.

According to some non-limiting embodiments or examples, provided is a method, comprising: receiving, by at least one data processor, one or more user inputs defining a proposed trajectory for a vehicle; determining, by the at least one data processor, one or more constraints imposed by a motion planner of the vehicle; performing, by the at least one data processor, a verification of the proposed trajectory to determine whether the proposed trajectory satisfies the one or more constraints; and in response to the verification of the proposed trajectory being unsuccessful, preventing, by the at least one data processor, the proposed trajectory from being sent to the motion planner of vehicle.

According to some non-limiting embodiments or examples, provided is at least one non-transitory computer-readable medium comprising one or more instructions that, when executed by at least one processor, cause the at least one processor to: receiving one or more user inputs defining a proposed trajectory for a vehicle; determining one or more constraints imposed by a motion planner of the vehicle; performing a verification of the proposed trajectory to determine whether the proposed trajectory satisfies the one or more constraints; and in response to the verification of the proposed trajectory being unsuccessful, preventing the proposed trajectory from being sent to the motion planner of vehicle.

According to some non-limiting embodiments or examples, provided is a system, comprising: at least one data processor; and at least one memory storing instructions, which when executed by the at least one data processor, result in operations comprising: receiving one or more user inputs defining a proposed trajectory for a vehicle; determining one or more constraints imposed by a motion planner of the vehicle; performing a verification of the proposed trajectory to determine whether the proposed trajectory satisfies the one or more constraints; and in response to the verification of the proposed trajectory being unsuccessful, preventing the proposed trajectory from being sent to the motion planner of vehicle.

In the foregoing description, aspects and embodiments of the present disclosure have been described with reference to numerous specific details that can vary from implementation to implementation. Accordingly, the description and drawings are to be regarded in an illustrative rather than a restrictive sense. Any definitions expressly set forth herein for terms contained in such claims shall govern the meaning of such terms as used in the claims. In addition, when we use the term "further comprising," in the foregoing description or following claims, what follows this phrase can be an additional step or entity, or a sub-step/sub-entity of a previously-recited step or entity.

## Claims

1. A method (700), comprising:
receiving (702), by at least one data processor, one or more user inputs defining a proposed trajectory for a vehicle;
determining (704), by the at least one data processor, one or more constraints imposed by a motion planner of the vehicle based on map data and data associated with classifications of physical objects in an environment along the proposed trajectory, wherein a classification of a physical object is based on one or more identified groups of the physical objects;
performing (706), by the at least one data processor, a verification of the proposed trajectory to determine whether the proposed trajectory satisfies the one or more constraints, wherein a verified proposed trajectory maintains a minimum clearance from the physical objects and is located within a drivable surface according to the map data; and
in response to the verification of the proposed trajectory being unsuccessful, preventing (708), by the at least one data processor, the proposed trajectory from being sent to the motion planner of vehicle; and in response to the verification of the proposed trajectory being successful, sending (710) the proposed trajectory to the motion planner of the vehicle, and
generating control signals to autonomously operate the vehicle in accordance with a verified proposed trajectory.

2. The method (700) of claim 1, further comprising:
generating a user interface configured to receive the one or more user inputs defining the proposed trajectory for the vehicle.

3. The method (700) of claim 2, wherein the user interface is generated to include one or more indicators corresponding to the one or more constraints imposed by the motion planner of the vehicle.

4. The method (700) of claim 3, wherein the one or more indicators include a visual indication of one or more zones in which to draw a valid path.

5. The method (700) of claim 4, wherein the one or more zones in which to draw the valid path are determined based on one or more maximums or minimums associated with the one or more constraints imposed by the motion planner of the vehicle; or wherein the one or more zones in which to draw the valid path are determined based on at least one of a minimum turning radius of the vehicle, a minimum clearance from one or more objects in the environment, and a minimum clearance from a lane boundary.

6. The method (700) of claim 3, wherein the one or more indicators include a visual indication of a cost associated with the proposed trajectory, and wherein the cost of the proposed trajectory corresponds to a magnitude of deviation from the one or more constraints imposed by the motion planner of the vehicle; optionally wherein the visual indication identifies one or more portions of the proposed trajectory in which the proposed trajectory is at least one of within a threshold distance of an object, deviates from the drivable surface, and crosses a lane boundary.

7. The method (700) of any one of claims 1 to 6, wherein the one or more user inputs define the proposed trajectory by at least specifying one or more nodes or segments forming the proposed trajectory.

8. The method (700) of any one of claims 1 to 7, wherein the one or more constraints include that the proposed trajectory does not collide with one or more objects present in the environment.

9. The method (700) of any one of claims 1 to 8, wherein the one or more constraints imposed by the motion planner of the vehicle are determined based on a map received from the vehicle; and/or wherein the one or more constraints imposed by the motion planner of the vehicle are determined based on a location of one or more objects tracked by the vehicle.

10. The method (700) of any one of claims 1 to 9, further comprising:
in response to the verification of the proposed trajectory being successful, sending, by the at least one data processor, the proposed trajectory to the motion planner of the vehicle.

11. The method (700) of any one of claims 1 to 10, further comprising:
in response to the verification of the proposed trajectory being unsuccessful, generating, by the at least one data processor, a notification to redraw the proposed trajectory.

12. The method (700) of claim **11,** further comprising:
receiving, by at least one data processor, one or more user inputs redrawing the proposed trajectory for the vehicle;
performing, by the at least one data processor, a verification of the redrawn trajectory to determine that the redrawn trajectory satisfies the one or more constraints; and
in response to the verification of the redrawn trajectory being successful, sending, by the at least one data processor, the redrawn trajectory to the motion planner of the vehicle.

13. The method (700) of any one of claims 1 to 12, wherein
the one or more constraints include that the proposed trajectory and does not collide with one or more objects present in the environment; and/or wherein
the method further comprises
in response to the verification of the proposed trajectory being unsuccessful, generating, by the at least one data processor, a notification to redraw the proposed trajectory,
receiving, by at least one data processor, one or more user inputs redrawing the proposed trajectory for the vehicle,
performing, by the at least one data processor, a verification of the redrawn trajectory to determine that the redrawn trajectory satisfies the one or more constraints, and
in response to the verification of the redrawn trajectory being successful, sending, by the at least one data processor, the redrawn trajectory to the motion planner of vehicle.

14. A system, comprising:
at least one data processor; and
at least one memory storing instructions, which when executed by the at least one data processor, cause the at least one data processor to perform the method (700) of any one of claims 1 to 13.

15. A non-transitory computer readable medium storing instructions, which when executed by at least one data processor, cause the at least one data processor to perform the method (700) of any one of claims 1 to 13.

## Patentansprüche

1. Verfahren (700), umfassend:
Empfangen (702), durch mindestens einen Datenprozessor, einer oder mehrerer Benutzereingaben, die eine vorgeschlagene Bewegungsbahn für ein Fahrzeug definieren;
Bestimmen (704), durch den mindestens einen Datenprozessor, einer oder mehrerer Einschränkungen, die von einem Bewegungsplaner des Fahrzeugs auferlegt werden, auf der Grundlage von Kartendaten und Daten, die mit Klassifizierungen physischer Objekte in einer Umgebung entlang der vorgeschlagenen Bewegungsbahn im Zusammenhang stehen, wobei eine Klassifizierung eines physischen Objekts auf einer oder mehreren identifizierten Gruppen der physischen Objekte basiert;
Durchführen (706), durch den mindestens einen Datenprozessor, einer Verifizierung der vorgeschlagenen Bewegungsbahn, um zu bestimmen, ob die vorgeschlagene Bewegungsbahn die eine oder mehreren Einschränkungen erfüllt, wobei eine verifizierte vorgeschlagene Bewegungsbahn einen Mindestabstand zu den physischen Objekten einhält und sich innerhalb einer befahrbaren Oberfläche gemäß den Kartendaten befindet; und
als Reaktion auf eine erfolglose Verifizierung der vorgeschlagenen Bewegungsbahn, Verhindern (708), durch den mindestens einen Datenprozessor, dass die vorgeschlagene Bewegungsbahn an den Bewegungsplaner des Fahrzeugs gesendet wird; und als Reaktion auf eine erfolgreiche Verifizierung der vorgeschlagenen Bewegungsbahn, Senden (710) der vorgeschlagenen Bewegungsbahn an den Bewegungsplaner des Fahrzeugs, und
Erzeugen von Steuersignalen zum autonomen Betreiben des Fahrzeugs gemäß einer verifizierten vorgeschlagenen Bewegungsbahn.

2. Verfahren (700) nach Anspruch 1, weiter umfassend:
Erzeugen einer Benutzerschnittstelle, die dazu konfiguriert ist, die eine oder mehreren Benutzereingaben zu empfangen, die die vorgeschlagene Bewegungsbahn für das Fahrzeug definieren.

3. Verfahren (700) nach Anspruch 2, wobei die Benutzerschnittstelle so erzeugt ist, dass sie einen oder mehrere Indikatoren aufweist, die der einen oder den mehreren Einschränkungen entsprechen, die von dem Bewegungsplaner des Fahrzeugs auferlegt werden.

4. Verfahren (700) nach Anspruch 3, wobei der eine oder die mehreren Indikatoren eine visuelle Indikation einer oder mehrerer Zonen aufweisen, in denen ein zulässiger Weg gezeichnet werden soll.

5. Verfahren (700) nach Anspruch 4, wobei die eine oder mehreren Zonen, in denen der zulässige Weg gezeichnet werden soll, auf der Grundlage eines oder mehrerer Maximal- oder Minimalwerte bestimmt werden, die mit der einen oder den mehreren Einschränkungen im Zusammenhang stehen, die von dem Bewegungsplaner des Fahrzeugs auferlegt werden; oder wobei die eine oder mehreren Zonen, in denen der zulässige Weg gezeichnet werden soll, auf der Grundlage bestimmt werden von mindestens einem von einem minimalen Wenderadius des Fahrzeugs, einem Mindestabstand zu einem oder mehreren Objekten in der Umgebung und einem Mindestabstand zu einer Fahrspurgrenze.

6. Verfahren (700) nach Anspruch 3, wobei der eine oder die mehreren Indikatoren eine visuelle Indikation von mit der vorgeschlagenen Bewegungsbahn im Zusammenhang stehenden Kosten aufweisen, und wobei die Kosten der vorgeschlagenen Bewegungsbahn einem Ausmaß der Abweichung von der einen oder den mehreren Einschränkungen entsprechen, die von dem Bewegungsplaner des Fahrzeugs auferlegt werden; wobei optional die visuelle Indikation einen oder mehrere Abschnitte der vorgeschlagenen Bewegungsbahn identifiziert, in denen die vorgeschlagene Bewegungsbahn zumindest eines ist von innerhalb eines Schwellenabstands zu einem Objekt, von der befahrbaren Oberfläche abweichend oder eine Fahrspurgrenze überquerend.

7. Verfahren (700) nach einem der Ansprüche 1 bis 6, wobei die eine oder mehreren Benutzereingaben die vorgeschlagene Bewegungsbahn definieren, indem sie zumindest einen oder mehrere Knoten oder Segmente vorgeben, die die vorgeschlagene Bewegungsbahn bilden.

8. Verfahren (700) nach einem der Ansprüche 1 bis 7, wobei die eine oder mehreren Einschränkungen einschließen, dass die vorgeschlagene Bewegungsbahn nicht mit einem oder mehreren in der Umgebung vorhandenen Objekten kollidiert.

9. Verfahren (700) nach einem der Ansprüche 1 bis 8, wobei die eine oder mehreren Einschränkungen, die von dem Bewegungsplaner des Fahrzeugs auferlegt werden, auf der Grundlage einer von dem Fahrzeug empfangenen Karte bestimmt werden; und/oder wobei die eine oder mehreren Einschränkungen, die von dem Bewegungsplaner des Fahrzeugs auferlegt werden, auf der Grundlage einer Position eines oder mehrerer Objekte bestimmt werden, die von dem Fahrzeug nachverfolgt werden.

10. Verfahren (700) nach einem der Ansprüche 1 bis 9, weiter umfassend:
als Reaktion auf eine erfolgreiche Verifizierung der vorgeschlagenen Bewegungsbahn, Senden, durch den mindestens einen Datenprozessor, der vorgeschlagenen Bewegungsbahn an den Bewegungsplaner des Fahrzeugs.

11. Verfahren (700) nach einem der Ansprüche 1 bis 10, weiter umfassend:
als Reaktion auf eine erfolglose Verifizierung der vorgeschlagenen Bewegungsbahn, Erzeugen, durch den mindestens einen Datenprozessor, einer Benachrichtigung zum Umzeichnen der vorgeschlagenen Bewegungsbahn.

12. Verfahren (700) nach Anspruch 11, weiter umfassend:
Empfangen, durch mindestens einen Datenprozessor, einer oder mehrerer Benutzereingaben, die die vorgeschlagene Bewegungsbahn für das Fahrzeug umzeichnen;
Durchführen, durch den mindestens einen Datenprozessor, einer Verifizierung der umgezeichneten Bewegungsbahn, um zu bestimmen, dass die umgezeichnete Bewegungsbahn die eine oder mehreren Einschränkungen erfüllt; und
als Reaktion auf eine erfolgreiche Verifizierung der umgezeichneten Bewegungsbahn, Senden, durch den mindestens einen Datenprozessor, der umgezeichneten Bewegungsbahn an den Bewegungsplaner des Fahrzeugs.

13. Verfahren (700) nach einem der Ansprüche 1 bis 12, wobei
die eine oder mehreren Einschränkungen einschließen, dass die vorgeschlagene Bewegungsbahn nicht mit einem oder mehreren in der Umgebung vorhandenen Objekten kollidiert; und/oder wobei
das Verfahren weiter umfasst:
als Reaktion auf eine erfolglose Verifizierung der vorgeschlagenen Bewegungsbahn, Erzeugen, durch den mindestens einen Datenprozessor, einer Benachrichtigung zum Umzeichnen der vorgeschlagenen Bewegungsbahn,
Empfangen, durch mindestens einen Datenprozessor, einer oder mehrerer Benutzereingaben, die die vorgeschlagene Bewegungsbahn für das Fahrzeug umzeichnen,
Durchführen, durch den mindestens einen Datenprozessor, einer Verifizierung der umgezeichneten Bewegungsbahn, um zu bestimmen, dass die umgezeichnete Bewegungsbahn die eine oder mehreren Einschränkungen erfüllt, und
als Reaktion auf eine erfolgreiche Verifizierung der umgezeichneten Bewegungsbahn, Senden, durch den mindestens einen Datenprozessor, der umgezeichneten Bewegungsbahn an den Bewegungsplaner des Fahrzeugs.

14. System, umfassend:
mindestens einen Datenprozessor; und
mindestens einen Speicher, in dem Anweisungen gespeichert sind, die, wenn sie durch den mindestens einen Datenprozessor ausgeführt werden, den mindestens einen Datenprozessor dazu veranlassen, das Verfahren (700) nach einem der Ansprüche 1 bis 13 durchzuführen.

15. Nichtflüchtiges computerlesbares Medium, auf dem Anweisungen gespeichert sind, die, wenn sie durch mindestens einen Datenprozessor ausgeführt werden, den mindestens einen Datenprozessor dazu veranlassen, das Verfahren (700) nach einem der Ansprüche 1 bis 13 durchzuführen.

## Revendications

1. Procédé (700), comprenant :
la réception (702), par au moins un processeur de données, d'une ou de plusieurs entrées utilisateur définissant une trajectoire proposée pour un véhicule ;
la détermination (704), par ledit au moins un processeur de données, d'une ou de plusieurs contraintes imposées par un planificateur de mouvement du véhicule sur la base de données cartographiques et de données associées à des classifications d'objets physiques dans un environnement le long de la trajectoire proposée, une classification d'un objet physique étant basée sur un ou plusieurs groupes identifiés d'objets physiques ;
la réalisation (706), par ledit au moins un processeur de données, d'une vérification de la trajectoire proposée pour déterminer si la trajectoire proposée respecte une ou plusieurs contraintes, une trajectoire proposée vérifiée maintenant un dégagement minimal par rapport aux objets physiques et étant située dans une surface carrossable selon les données cartographiques ; et
en réponse à l'échec de la vérification de la trajectoire proposée, l'empêchement (708), par ledit au moins un processeur de données, de l'envoi de la trajectoire proposée au planificateur de mouvement du véhicule ; et
en réponse à la réussite de la vérification de la trajectoire proposée, l'envoi (710) de la trajectoire proposée au planificateur de mouvement du véhicule, et
la génération de signaux de commande pour faire fonctionner le véhicule de manière autonome conformément à une trajectoire proposée vérifiée.

2. Procédé (700) selon la revendication 1, comprenant en outre :
la génération d'une interface utilisateur configurée pour recevoir lesdites une ou plusieurs entrées utilisateur définissant la trajectoire proposée pour le véhicule.

3. Procédé (700) selon la revendication 2, dans lequel l'interface utilisateur est générée pour comprendre un ou plusieurs indicateurs correspondant auxdites une ou plusieurs contraintes imposées par le planificateur de mouvement du véhicule.

4. Procédé (700) selon la revendication 3, dans lequel lesdits un ou plusieurs indicateurs comprennent une indication visuelle d'une ou de plusieurs zones permettant le tracé d'un chemin valide.

5. Procédé (700) selon la revendication 4, dans lequel lesdites une ou plusieurs zones permettant le tracé du chemin valide sont déterminées sur la base d'un ou de plusieurs maxima ou minima associés auxdites une ou plusieurs contraintes imposées par le planificateur de mouvement du véhicule ; ou dans lequel lesdites une ou plusieurs zones permettant le tracé du chemin valide sont déterminées sur la base d'au moins un rayon minimal de braquage du véhicule, un dégagement minimal par rapport à un ou à plusieurs objets dans l'environnement, et un dégagement minimal par rapport à une limite de voie.

6. Procédé (700) selon la revendication 3, dans lequel lesdits un ou plusieurs indicateurs comprennent une indication visuelle d'un coût associé à la trajectoire proposée, le coût de la trajectoire proposée correspondant à une ampleur d'écart par rapport auxdites une ou plusieurs contraintes imposées par le planificateur de mouvement du véhicule ; optionnellement, dans lequel l'indication visuelle identifie une ou plusieurs parties de la trajectoire proposée dans lesquelles la trajectoire proposée est au moins une des suivantes : située à une distance seuil d'un objet, s'écarte de la surface carrossable, et franchit une limite de voie.

7. Procédé (700) selon l'une quelconque des revendications 1 à 6, dans lequel lesdites une ou plusieurs entrées utilisateur définissent la trajectoire proposée en spécifiant au moins un ou plusieurs nœuds ou segments formant la trajectoire proposée.

8. Procédé (700) selon l'une quelconque des revendications 1 à 7, dans lequel lesdites une ou plusieurs contraintes comprennent l'absence de collision de la trajectoire proposée avec un ou plusieurs objets présents dans l'environnement.

9. Procédé (700) selon l'une quelconque des revendications 1 à 8, dans lequel lesdites une ou plusieurs contraintes imposées par le planificateur de mouvement du véhicule sont déterminées sur la base d'une carte reçue en provenance du véhicule ; et/ou dans lequel lesdites une ou plusieurs contraintes imposées par le planificateur de mouvement du véhicule sont déterminées sur la base de la localisation d'un ou plusieurs objets suivis par le véhicule.

10. Procédé (700) selon l'une quelconque des revendications 1 à 9, comprenant en outre :
en réponse à la réussite de la vérification de la trajectoire proposée, l'envoi, par ledit au moins un processeur de données, de la trajectoire proposée au planificateur de mouvement du véhicule.

11. Procédé (700) selon l'une quelconque des revendications 1 à 10, comprenant en outre :
en réponse à la réussite de la vérification de la trajectoire proposée, la génération, par ledit au moins un processeur de données, d'une notification visant à redessiner la trajectoire proposée.

12. Procédé (700) selon la revendication 11, comprenant en outre :
la réception, par ledit au moins un processeur de données, d'une ou de plusieurs entrées utilisateur redessinant la trajectoire proposée pour le véhicule ;
la réalisation, par ledit au moins un processeur de données, d'une vérification de la trajectoire redessinée pour déterminer si la trajectoire redessinée respecte une ou plusieurs contraintes ; et
en réponse à la réussite de la vérification de la trajectoire redessinée, l'envoi, par ledit au moins un processeur de données, de la trajectoire redessinée au planificateur de mouvement du véhicule.

13. Procédé (700) selon l'une quelconque des revendications 1 à 12, dans lequel lesdites une ou plusieurs contraintes comprennent l'absence de collision de la trajectoire proposée avec un ou plusieurs objets présents dans l'environnement ; et/ou le procédé comprenant en outre
en réponse à l'échec de la vérification de la trajectoire proposée, la génération, par ledit au moins un processeur de données, d'une notification visant à redessiner la trajectoire proposée,
la réception, par ledit au moins un processeur de données, d'une ou de plusieurs entrées utilisateur redessinant la trajectoire proposée pour le véhicule,
la réalisation, par ledit au moins un processeur de données, d'une vérification de la trajectoire redessinée pour déterminer si la trajectoire redessinée respecte une ou plusieurs contraintes, et
en réponse à la réussite de la vérification de la trajectoire redessinée, l'envoi, par ledit au moins un processeur de données, de la trajectoire redessinée au planificateur de mouvement du véhicule.

14. Système comprenant :
au moins un processeur de données ; et
au moins une mémoire stockant des instructions, qui, lorsqu'elles sont exécutées par ledit au moins un processeur de données, amènent ledit au moins un processeur à exécuter le procédé (700) selon l'une quelconque des revendications 1 à 13.

15. Support lisible par ordinateur non transitoire stockant des instructions qui, lorsqu'elles sont exécutées par ledit au moins un processeur de données, amènent ledit au moins un processeur à exécuter le procédé (700) selon l'une quelconque des revendications 1 à 13.
